# EUROPEAN PATENT APPLICATION

(11) **EP 3 995 205 A1**
(43) Date of publication of application: **11.05.2022**
(21) Application number: 20382970.0
(22) Date of filing: 10.11.2020
(51) Int. Cl.: B01D 53/62, B01D 53/78, B01J 19/00, B01J 19/18, C01D 7/07, B01F 3/04, B01F 7/22, B01F 15/00

(54) **CO2 CAPTURE USING ALKALINE MEDIA FOR THE PREPARATION OF SODIUM CARBONATE**

(71) Applicant: Universidad de Castilla La Mancha, 02071 Albacete (ES); Alcoholes de Tomelloso S.A. (Altosa), 13700 Tomelloso (Ciudad Real) (ES)
(72) Inventor: López Montero, Juan Antonio, 13700 Tomelloso (Ciudad Real) (ES); Nieto Sepúlveda, Francisco Javier, 45840 La Puebla de Almoradiel (Toledo) (ES); Alonso Moreno, Carlos, 02071 Albacete (ES); Canales Vázquez, Jesús, 02071 Albacete (ES); García Yuste, Santiago, 02071 Albacete (ES); Zafrilla Rodríguez, Jorge Enrique, 02071 Albacete (ES); Gueddari Aourir, Abdessamad, 02071 Albacete (ES)
(74) Representative: Balder IP Law, S.L.

(57) **Abstract**

The present invention refers to a method for the preparation of sodium carbonate by capturing carbon dioxide in an NaOH aqueous solution, wherein the contact is carried out directly on the free surface of the liquid phase, where a gas-liquid interphase is formed. The invention also refers to the carbonator reactor (101, 201) comprising a stirring system and at least one baffle specifically designated to carry out the method for the preparation of sodium carbonate herein described.

## Description

### TECHNICAL FIELD

The invention relates to a method for the preparation of sodium carbonate, which in turn, may contribute to decrease carbon dioxide emissions to the atmosphere.

Therefore, the present invention can be included within the technical field of Greenhouse Gas (GHG) removal, since the invention can eliminate one of the main GHGs such as carbon dioxide (CO₂) through a method comprising the capture of CO₂ using an alkaline medium such as NaOH as absorber and its chemical conversion into a marketable product such as sodium carbonate (Na₂CO₃).

### BACKGROUND OF THE INVENTION

Sodium carbonate (Na₂CO₃), usually referred to as "soda ash", has long been one of the most important chemical compounds produced due to its broad range of applications, e.g. in cleaning products, glass manufacturing, chemical manufacturing, food, personal care products, pulp and paper products, swimming pool maintenance, etc.

One of the most established methods to produce sodium carbonate that became the industry standard for nearly a century was the Leblanc method. The product of this reaction is a dark ashy material that contains sodium carbonate, calcium sulfide, carbon dioxide and other byproducts. Then, the sodium carbonate is extracted from this mixture and purified. However, this method suffered from one serious drawback since it required large amounts of energy. For this reason, there has always been a lookout for an alternative method for producing sodium carbonate that was less energy-demanding.

Solvay process followed the Leblanc method and was based on the formation of sodium bicarbonate by treating sodium chloride with carbon dioxide and ammonia. Then, sodium carbonate is obtained by simply heating the sodium bicarbonate. Solvay process is regarded as one of the great accomplishments in the first century of industrial chemistry and by 1900, almost all of the sodium carbonate produced in the world was made by the Solvay process. The Solvay soda process is the most widespread, and variation, the Hou's process, is also used. This process eliminates the production of calcium chloride, but generates ammonium chloride as by-product.

On the other hand, during the decade from 2008-2018, a yearly increase of about 1,5% of the carbon dioxide emissions at a global level has been observed, which, in turn, results in a carbon dioxide release of circa 33 Gt to the atmosphere. Consequently, several international organisms have been forced to set and develop new strategies to deal with the negative effects in natural environment and global warming caused by carbon dioxide emissions.

Several approaches to decrease carbon dioxide emissions were adopted by many countries signing the Paris Agreement in 2015. Among the CO₂ removal strategies, carbon capture sequestration (CCS) and carbon dioxide utilization (CDU) approaches are two of the most developed.

CCS approaches essentially involve the capture of carbon dioxide from power plants or industrial processes and the subsequent geological sequestration of the carbon dioxide into deep underground rock formations. Carbon dioxide capture by solvents, membrane separation, cryogenic fractionation, and adsorption using molecular sieves are some of the most important CCS approaches that have been reported to date (C. Alonso-Moreno, S. Garcia Yuste. Science of the Total Environment 568. 2016. 319-326). In recent years, CCS has been reported as the best solution to control carbon dioxide emissions. However, this technology is currently facing leakage risk, which affects the long-term liability. Additionally, there is a cost-ineffective storage capacity in some essential areas due to energy-penalty and material requirements, in addition to social resistance due to the onshore storage locations. Furthermore, it has raised the question of what to do with the increasingly large amounts of carbon dioxide (Cuellar-Franca, R.M., Azapagic, A. CO2 Util. 2015. 9, 82-102).

CDU approaches based on the use of carbon dioxide as a chemical feedstock to make useful products, including chemicals and fuels, represent an attractive alternative to add value to a common waste gas and to reduce pollution (Aresta, M., Dibenedetto. Dalton Trans. 2007. 2975-2992). CDU approaches have the potential to reduce the costs associated with CCS approaches by diverting some of the waste carbon dioxide into the production of valuable chemicals.

In this context, the inventors published a theoretical approach to a new environmental strategy based on the CDU for capturing carbon dioxide (C. *Alonso-Moreno,* S. *Garcia-Yuste. **2016).*** In this publication, the inventors focused their study on CO₂ sources which are relatively small but highly enriched, such as the CO₂ emissions from alcoholic fermentation processes (AFP), for its subsequent conversion to Na₂CO₃. It has been estimated that this strategy might produce more than 30,6 Mt of Na₂CO₃ by capturing 12,7 Mt of CO₂, achieving a reduction up to 56 Mt of CO₂ negative emissions per year. However, this publication theoretically develops the new strategy for capturing carbon dioxide, but does not disclose how to execute it.

The capture or elimination of CO₂ using liquid reactive agents (absorbents) such as alkalis or organic solutions of alkanolamines is a technique widely used in the chemical sector. Absorbents commonly used for CO₂ capturing may be, for example, NaOH, KOH, Na₂CO₃, Ca(OH)₂, monoethanolamine (MEA), diethanolamine (DEA), triethanolamine (TEA), methyl diethanolamine (MDEA), monoisopropyl amine (MIPA).

These procedures are usually carried out in different types of washing towers or columns such as packed or filled type, spraying, bubbling, film absorber, stirring bubbling towers, etc. These devices comprise a cylindrical column wherein a parallel or countercurrent gas-liquid (G-L) flow model is generally established inside, depending on the objective operating conditions. However, these devices can only remove CO₂ from a gas stream with a very low CO₂ concentration, up to a maximum of 30 wt.%, and, additionally, they must also use diluted liquid reactive agents.

Additionally, some technologies using stirred reactors have been described for capturing CO₂, wherein multiphase contactors (e.g.: spargers or induced gas agitators) are used for contacting the gas phase with the liquid phase. As a consequence, these procedures for capturing CO₂ in an absorbent such as NaOH also require lower amounts of both the CO₂ and the absorbent, in order to avoid the obstruction of the multiphase contactors that would cause the system to stop.

For instance, PI1100894-6 B1 refers to a process for producing sodium bicarbonate by reacting CO₂ with an aqueous sodium hydroxide solution. In this process, the aqueous sodium hydroxide solution is contacted with carbon dioxide obtained from alcoholic fermentation processes. The procedure is carried out either in a column type spray or a filler column attached to a settler. This process is performed in a continuous regime and implies recirculation of reagents and/or products. Consequently, the process has the disadvantage that the reagents must be diluted or treated before contacting them, in order to avoid associated problems with the strong exothermic nature of the reaction alongside the recirculation of reagents and/or precipitated products that may cause obstructions in different parts of the system.

On the other hand, US2008/0193365 describes a method for producing sodium carbonate, wherein an aqueous sodium chloride solution is electrolyzed in a cell with a membrane selectively permeable to ions in order to produce chlorine and an aqueous solution comprising sodium hydroxide, the aqueous solution comprising sodium hydroxide is carbonated, the resulting carbonate aqueous solution is evaporated to obtain sodium carbonate crystals, which are separated from the slurry. Nonetheless, this method also presents the drawback associated with the recirculation of reagents and/or products, that may lead to unintentional interruptions of the process as a consequence of depositions thereof and obstructions in some parts of the reactors. Moreover, this method generates undesired by-products such as calcium chloride that has no application and is normally discharged into the sea/river.

Thus, there is a need to provide a simplified method, easy to implement at an industrial scale, that overcomes the above-mentioned drawbacks associated with the manufacture of Na₂CO₃ by capturing CO₂ in an aqueous sodium hydroxide solution, thus helping to reduce the negative carbon dioxide emissions.

### SUMMARY OF THE INVENTION

The present invention provides an economic method that produces sodium carbonate by reacting carbon dioxide (CO₂) with an aqueous sodium hydroxide solution. This method does not require a high consumption of energy; on the contrary, it can generate a great amount of energy that can be used for other heating or cooling processes among other applications.

More specifically, the method for the preparation of sodium carbonate according to this invention solves the above-mentioned problems as, differently from other well-known processes requiring contact techniques, it allows working with high concentrations of reagents, CO₂ and NaOH, thus avoiding undesired stops of the process due to obstructions in the gas stream supply system such as multiphasic contactors, once the Na₂CO₃ solid is generated. Although it is a semi-continuous regime, it is possible to work with several independent reactors, without recirculation of reagents and/or products, sequenced in time for the continuous capture of CO₂. This is very useful in cases where continuous CO₂ emissions are available, as occurs with alcoholic fermentation processes (AFP), where fermentation periods last between 4 and 25 days.

Accordingly, the method of the present invention allows the capture of highly concentrated CO₂ such as, for example, that generated in AFP, wherein the CO₂ emission ratio is so high that conventional systems would need huge containers to store the diluted aqueous NaOH solution required to produce the same effect as when using highly concentrated solutions. Conventional systems such as filled columns, even those having specific packing to increase the captured amount of CO₂, would demand extremely large diameters and dimensions for capturing high concentrations of CO₂. Moreover, conventional reactors of gas induced by agitation, bubbling columns, spray columns or the tanks agitated with sparger systems are not suitable for handling high concentrations of reagents, since all of them would suffer stops in their process due to the obstruction. This is a technical problem that forcefully implies the use of dilute reagents as exemplified by the above-mentioned patent documents PI1100894-6 B1 and US2008/0193365. On the other hand, those methods working with highly diluted concentrations of reagents would require a great amount of energy consumption to increase the concentration of the resulting aqueous solutions in order to precipitate a solid form of sodium carbonate, which is more marketable than aqueous solutions.

The method of the present invention provides great versatility because it can be carried out with any concentration of reagents. Thus, in some particular embodiments of the invention, aqueous solutions comprising not lower than 10 wt.% of NaOH and a gas stream comprising not lower than 30 wt.% of CO₂ as described in this document can be used, thus reducing the requirements for transport and storage of reagents, as well as the dimensions of the installation, the energy consumption and the water footprint.

Another significant advantage of the present invention is that the carbonator reactor according to the invention can provide efficient heat transmission, which is particularly important in the method for the preparation of sodium carbonate described in this document due to the strong exothermic character of the reaction, in particular in those embodiments of the invention where high concentrations of reagents are used. All the energy generated in the method of the present invention can be efficiently dissipated due to the elevated heat transfer area and the mass flows achieved.

Advantageously, the energy generated as a consequence of the carbonation process may be utilized to improve the thermal efficiency of other processes or be converted to other useful forms of energy.

Additionally, the method of the present invention may be carried out in a broad range of pressures, in particular, it may be carried out at atmospheric pressure. Therefore, the high energetic consumption due to gas compression steps required in some conventional methods can be avoided, as well as the economic cost associated with building complex equipment required to carry out such a compression.

As previously mentioned in this document, the method for the preparation of sodium carbonate according to the invention provides a great versatility because it can be carried out with any concentration of reagents. This method provides significant advantage over previously known methods, even in those particular embodiments of the invention wherein diluted concentrations of CO₂ and NaOH may be used.

In particular, the method of the present invention can be carried out in an easily assembled equipment, wherein no maintenance of contactors is required. Taking into account that the reagents used are corrosive, this may be an important advantage in view of the industrial application of the method for the preparation of sodium carbonate herein described.

Additionally, there is no significant pressure loss inside the carbonator reactor in the method according to the invention, which is very different to other conventional methods wherein the gas has to pass through the entire liquid phase.

Another advantage of the method of the present invention is that it involves a constructive simplicity and low cost and, therefore, this method can be more easily implemented in the industry in order to capture CO₂ using NaOH as absorber, and transform such a harmful contaminant into a marketable product such as sodium carbonate.

Thus, one object of the present invention refers to an improved method for the preparation of sodium carbonate, characterized by comprising the following steps:
a) providing at least one carbonator reactor containing a NaOH aqueous solution;
b) supplying a gas stream comprising CO₂ to the at least one carbonator reactor provided in step a), wherein
   - the gas stream is introduced in said carbonator reactor above the surface of the NaOH aqueous solution,
   - preferably the flow of the gas stream comprising CO₂ is equal to or higher than the absorption capacity of the system, and
   - the reaction mixture is continuously stirred following a turbulent agitation regime,
c) stopping the supply of the gas stream comprising CO₂ to the carbonator reaction, and
d) discharging the reaction mixture containing sodium carbonate from the at least one carbonator reactor.

The method for the preparation of sodium carbonate described herein possesses a high capacity of absorption during the reaction of CO₂ with NaOH as a consequence of the turbulences generated in the gas-liquid interface and the continuous renovation thereof. The continuous renovation of the gas-liquid interface can be achieved by using a stirred reactor that enhances the mass transfer process. At the same time, the chemical reaction is accelerated by the presence of OH⁻ ions as absorbate. The method of the present invention may work in a semi-continuous regime by supplying CO₂ in a controlled manner, so that the reaction can be safely stopped at any moment, e.g., in case the operation parameters were outside the safety limits established.

In the method of the present invention, sodium carbonate monohydrate (Na₂CO₃·H₂O) may be obtained alongside its aqueous solution; which can be subsequently dried to obtain Na₂CO₃. In the method described herein further products can be obtained, if the reaction is not stopped once all the OH⁻ coming from the NaOH aqueous solution is consumed. A mixture of carbonates containing traces of sodium bicarbonate (NaHCO₃), as well as a variety of trona (Na₂CO₃·NaHCO₃·2H₂O) may also be obtained. Those products may be marketed directly with the same applications as Na₂CO₃.

The strong exothermic reaction releases a significant amount of heat energy that can be extracted by conventional means such as a cooling jacket and/or, if necessary, a coil. This heat energy can be used to improve the efficiency of other processes carried out in the facility, or may be transformed into another useful type of energy.

Additionally, a further object of the invention described herein refers to a carbonator reactor (which may also be referred to as "carbonation stirred reactor" or "stirred reactor" in this document) comprising:
- a body comprising:
   - a nozzle,
   - at least an inlet adapted for introducing liquids, solids or mixtures thereof,
   - at least one outlet adapted for discharging a liquid phase or slurry,
- means for regulating the temperature, and
- means for regulating the pressure,
characterized in that the carbonator reactor further comprises:
- a stirring system comprising at least one impeller comprising inclined blades, preferably said blades make an angle from 5° to 60° with respect to the vertical axis; and
- at least one baffle, preferably the width (w_{d}) of said baffle ranges from 1% to 15 % of the internal diameter (D) of a cylindrical shell comprised in the body of the carbonator reactor.

The present invention refers to a new and optimized carbonator reactor, which is particularly suitable to achieve an optimized chemical reaction between the CO₂ comprised in the gas stream and the liquid absorbent, in particular a NaOH aqueous solution. Thus, this carbonator reactor presents an optimized configuration that favors the mass transfer of the gas (CO₂) in the liquid, particularly in the gas-liquid interface formed in the method for the preparation of sodium carbonate described herein.

In some embodiments of the invention, the body of the carbonator reactor described herein preferably comprises a cylindrical shell, a conical bottom and an ellipsoidal or torispherical head. This constructive geometry of the reactor body enhances the mass transfer of the gas (CO₂) in the gas-liquid interface formed in the method for the preparation of sodium carbonate described herein. In these embodiments of the invention, the width (w_{d}) of the baffles preferably ranges from 1% to 15 % of the internal diameter (D) of the cylindrical shell.

In turn, the stirred system according to the invention can homogenize the reaction mixture and improve the hydrodynamic conditions in order to achieve a suitable dispersion of the gas into the liquid and an elevated, specific and effective interfacial area. Besides that, the stirred system of the present invention can be arranged in such a way as to enhance the transfer of heat outside the carbonator reactor.

The carbonator reactor according to the present invention is used for the first time herein in a method for the preparation of sodium carbonate that involves the direct supply of a CO₂ gas stream on the free surface of a NaOH aqueous solution.

The carbonator reactors according to the present invention can be easily installed and represent low construction costs compared to those associated with multiphasic contactor reactors commonly used in the field of the invention. Also, taking into account the thermodynamics of the method herein disclosed, the carbonator reactor according to the invention, helped by the stirring system that keeps a turbulent agitation regime in the reaction mixture, can enhance the heat transfer to outside improving the control of the temperature inside the carbonator reactor.

A further object of the present invention refers to the use of a carbonator reactor as described herein for the preparation of sodium carbonate by capturing of CO₂ in a NaOH aqueous solution, preferably following the method according to the current invention.

### DETAILED DESCRIPTION OF THE INVENTION

One aspect of the present invention refers to a method for the preparation of sodium carbonate, characterized by comprising the following steps:
a) providing at least one carbonator reactor containing a NaOH aqueous solution;
b) supplying a gas stream comprising CO₂ to the at least one carbonator reactor provided in step a), wherein
   - the gas stream is introduced in said carbonator reactor above the surface of the NaOH aqueous solution, and
   - the reaction mixture is continuously stirred following a turbulent agitation regime;
c) stopping the supply of the gas stream comprising CO₂ to the carbonator reaction; and
d) discharging the reaction mixture containing sodium carbonate from the at least one carbonator reactor.

The present invention relates to a method for the preparation of Na₂CO₃ by capturing CO₂ and reacting it heterogeneously with an aqueous solution of NaOH in a carbonator reactor (also called "carbonation stirred reactor" or "stirred reactor" herein) according to the next global reaction:

*CO*_{2(*g*)} + 2*NaOH*_{(*aq*)} → *Na*₂*CO*_{3(*aq*)} + *H*₂*O*_{(*l*)}

The reaction takes place by absorption of the CO₂ on the surface of the aqueous NaOH solution and follows the direct hydroxylation route consisting of two stages. The first stage is a direct reaction of CO₂ with OH⁻, with overall second-order kinetics, being of the first order for CO₂ and OH⁻ ion; while the second stage is an instantaneous proton transfer chemical reaction:

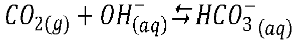

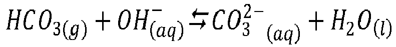

The invention relates to a method that, in contrast to previously known processes, does not use any special multiphase contacting apparatus intended to contact the CO₂ with NaOH, but that contact is carried out directly on the free surface of the liquid phase, where a gas-liquid interface is formed. Accordingly, the method of the present invention may work with any concentration of reagents, including high concentrations such as those specified in this document.

To date, no method has been described in the state of the art that works at such high reagent concentrations, due to the risk of generating an instantaneous precipitate in the contactors, which would continuously obstruct contactors leading to frequent interruptions of the process.

In the method for the preparation of sodium carbonate described herein, the physical process of mass transfer of the gas in the liquid is given by the driving force generated as a consequence of the gradient of concentration of the CO₂, which is produced by the resistances of the films in the interface. In this process of mass transfer, there are two resistances of the gaseous and liquid films by the diffusion of the gas in the liquid.

In the method of the present invention, the chemical reaction starts once the gas stream comprising CO₂ is supplied to the at least one stirred reactor containing a NaOH aqueous solution giving rise to a reaction mixture, in particular an heterogeneous reaction mixture formed by the NaOH aqueous solution (liquid) and the gas stream comprising CO₂ (gas). During the reaction, the NaOH concentration of the liquid phase gradually decreases as the CO₂ reacts with NaOH in the gas-liquid interface. Once all the OH⁻ present in the reaction mixture is consumed, the carbonation reaction can be considered as finished. If the saturation point of the Na₂CO₃ is achieved, a precipitate thereof is formed alongside one H₂O molecule. In particular, this may happen when the pH of the solution reaches a value between 8 and 13.

In the frame of this invention, it shall be understood that the term "carbonator reactor" means a reactor suitable for being used in a carbonation process, i.e., a process comprising the chemical reaction of carbon dioxide to produce carbonates, bicarbonates or carbonic acid. Since the carbonator reactor according to the invention comprises means for stirring the reaction mixture, in particular the stirring system described in this document, it may also be referred to as "carbonation stirred reactor", "stirred tank carbonator reactor" or "stirred reactor" in the frame of this invention.

In the present invention, two or more reactors can be used to achieve a continuous capture of CO₂ without interruption, so that the gas stream comprising CO₂ can be supplied to a different reactor, meanwhile the previous reactor used is discharged, cleaned and prepared again to continue the procedure. The method according to the present invention is carried out following a semi-continuous regime, wherein the CO₂ is supplied in a gradual and controlled manner during the reaction (step b), whereas the NaOH aqueous solution is incorporated to the process in a discontinuous manner before starting the carbonation reaction (step a).

The NaOH aqueous solution contained in the carbonator reactor provided in step a) of the method for the preparation of sodium carbonate described herein has preferably a concentration equal to or higher than 10 wt.%, preferably from 28 wt.% to 77 wt.%, more preferably from 35 wt.% to 55 wt. %, wherein these percentages are expressed by weight of NaOH with respect to the weight of the NaOH aqueous solution.

Thus, the method described in this document can also use an NaOH aqueous solution having the maximum available industrial concentration of NaOH, that is, a concentration of up to 77 wt.%, having a suitable absorption capacity to efficiently prepare Na₂CO₃, without obstructions that would lead to continuous interruptions of the process, reducing costs and emissions due to the transport of NaOH as a raw material, and avoiding dilution processes, which in turn favor its water footprint.

Advantageously, the NaOH aqueous solution intended to be used in the method of the present invention may be a commercially available solution, since these do not require any previous treatment process such as dilution. For instance, the NaOH aqueous solution used in the method according to the present invention may come directly from the chlor-alkali processes, wherein it can be obtained as a by-product or co-product depending on the demand for chloride and sodium hydroxide.

The method of the present invention provides a great versatility because it can be carried out with any concentration of reagents. For example, the method according to the invention may capture CO₂ from low concentrate gas stream generated in post-combustion processes. In particular, the gas stream may comprise a CO₂ concentration of about 7 wt.% when it comes from combined cycle plant with natural gas, or up to 25 wt. % when comes from coal plants. Moreover, the "direct air capture of CO₂" might be also used in the method of the present invention, wherein the CO₂ concentration is usually about 400 ppm.

However, the amount of CO₂ comprised in the gas stream supplied to the at least one carbonator reactor of the method for the preparation of sodium carbonate described herein is preferably equal to or higher than 30 wt.%, preferably from 80 wt.% to 100 wt.%, more preferably from 90 wt.% to 99.9 wt.%, and even more preferably from 95 wt.% to 99.9 wt.% wherein these percentages are expressed by weight of CO₂ in respect to the weight of the gas stream comprising CO₂.

Different to conventional methods for preparing Na₂CO₃ by capturing CO₂, the method according to the invention allows the capture of CO₂ from a highly concentrated gas stream, in particular from a concentration equal to or higher than 30 wt.% up to 100 wt.%. This achievement is very important in the field of Greenhouse Gas (GHG) removal, since the method described herein can capture CO₂ from different sources and effectively transform it in a valuable product such a sodium carbonate.

In some particular embodiments of the invention, the NaOH aqueous solution contained in the carbonator reactor provided in step a) of the method described herein has preferably a concentration equal to or higher than 10 wt.%, preferably from 28 wt.% to 77 wt.%, more preferably from 35 wt.% to 55 wt. %; percentages expressed by weight of NaOH with respect to the weight of the NaOH aqueous solution; whereas the amount of CO₂ comprised in the gas stream supplied to the at least one carbonator reactor in step b) of the method for the preparation of sodium carbonate described herein is preferably equal to or higher than 30 wt.%, preferably from 80 wt.% to 100 wt.%, more preferably from 90 wt.% to 99.9 wt.%, and even more preferably from 95 wt.% to 99.9 wt.%, percentages expressed by weight of CO₂ in respect to the weight of the gas stream comprising CO₂.

These particular embodiments of the invention are preferred because they allow the manufacture of sodium carbonate having a purity up to 99.99 wt.%, while reducing the requirements for transport and storage of diluted reagents, as well as the dimensions of the installation, the energy consumption and the water footprint.

In some particular embodiments of the invention, the CO₂ stream supplied to the at least one carbonator reactor may be generated in an alcoholic fermentative process (AFP), which is usually characterized by having a high CO₂ concentration, in particular equal to or higher than 40 wt.%, preferably from 70 wt.% to 99.9 wt.%, more preferably from 80 wt.% to 99.9 wt.%, even more preferably from 90 wt.% to 99.9 wt.%, and particularly preferably from 95 wt.% to 99.9 wt.%, wherein these percentages are expressed by weight of CO₂ in respect of the weight to the gas stream comprising CO₂.

Due to the high purity of CO₂ gas stream generated in AFP, previous treatments such as filtration might not be necessary, so that this gas stream can be directly supplied to the at least one carbonator reactor in the method for the preparation of sodium carbonate described herein.

The gas stream comprising CO₂ may be generated in AFP carried out in the production of a different beverage such as, for example, wine, beer, any spirit liquor such as whiskey, vodka, anise, gin, rum, tequila, cognac, brandy, cachaça; or any Asian liqueurs such as those produced in Korea, Japan or China. Preferably, the CO₂ gas stream is generated in an alcoholic fermentative process carried out in the manufacture of wine.

In those embodiments of the invention wherein the gas stream comprising CO₂ is generated in an AFP, the method described herein may comprise a further step wherein volatile compounds or other organic compounds that might be present in the gas stream are removed or at least reduced before supplying such a gas stream comprising CO₂ to the at least one carbonator reactor. This additional step may be done, for example, by means of a condenser exchanger or filter connected to the CO₂ gas stream supply line prior to the carbonator reactor inlet, which may be a nozzle in the carbonator reactor described in this document.

The flow of gas stream comprising CO₂ supplied to the carbonator reactor may be regulated during the method for the preparation of sodium carbonate described herein, so that this flow can be maintained constant within a specified range or it might be modified according to the requirements of the reaction. In particular, the supply of gas stream comprising CO₂ to the at least one carbonator reactor can be stopped at any time by cutting the CO₂ flow off or, alternatively, it might be directed to a different carbonator reactor.

In some particular embodiments of the invention described herein, the CO₂ gas stream may pass through a buffer (i.e., a damping membrane for flux variations) before being injected into the reactor. This system may be connected to a gas blower of variable speed in order to maintain the CO₂ injection flow constant, while allowing it to be regulated depending on controlled variables in the reactor.

The gas stream comprising CO₂ may be supplied to the carbonator reactor at any flow rate. In those particular embodiments of the invention wherein the gas stream comprising CO₂ is generated in an industrial process such that, for example, an alcoholic fermentative process, the flow rate may be established depending on the CO₂ discharge capacity of carbon emission source wherein said gas stream comprising CO₂ is generated.

In the method according to the invention, the gas stream comprising CO₂ is introduced in the at least one carbonator reactor so that it is in contact with the surface of the NaOH aqueous solution (liquid phase), giving rise to a reaction mixture wherein CO₂ is in contact with such surface of the NaOH aqueous solution by means of a gas-liquid interface; and the reaction mixture is continuously stirred following a turbulent agitation regime, so that the renewal of NaOH present on the free surface of the liquid phase in contact with the CO₂ is achieved, thus improving the mass transfer process.

This turbulent agitation regime has preferably a Reynolds number from 5,000 to 300,000, more preferably the Reynolds number may be from 70,000 to 190,000. In particular embodiments of the invention, wherein the reaction mixture is carried out at a temperature from 50°C to 80°C and a pressure from 0.02 barg to 0.35 barg, an optimum volumetric mass transfer coefficient *k_{L}a* may be obtained with a Reynolds number higher than 70,000.

In the frame of the present invention it should be understood that all pressures are relative pressures (i.e., the difference between absolute pressure and atmospheric pressure). Relative pressure is usually measured with a manometer and, therefore, it is also known as manometric pressure. In the field of the invention, relative pressure is commonly expressed in barg (bar gauge pressure), which corresponds to 10⁵ Pa.

The agitation regime is preferably between 50 and 400 rpm, and preferably the reaction mixture has a pattern of liquid free surface renewal speed of at least 0.06 m / s. To achieve such liquid free renewal speed, the mixing process may be optimized, for example, using advanced simulation techniques. In particular, Computational Fluid Dynamics is recommended for the design and determination of this flow pattern.

The stirring system described in this document has been specifically developed so that it can promote the transfer of heat outside the reactor. This stirring system comprises one or more turbine impellers as described herein to improve the specific Gas-Liquid contact area together with the continuous renewal of the contact surface, avoiding stops in the absorption process.

In some embodiments of the invention, the method for the preparation of sodium carbonate according to the invention may be carried out in at least one carbonator reactor comprising:
- a stirring system comprising at least one impeller further comprising inclined blades, preferably the blades make an angle from 5° to 60° with respect to the vertical axis; and
- at least one baffle, preferably the width (w_{b}) of said baffle ranges from 1 to 15 % of the diameter (D) of a cylindrical shell comprised in the carbonator reactor.

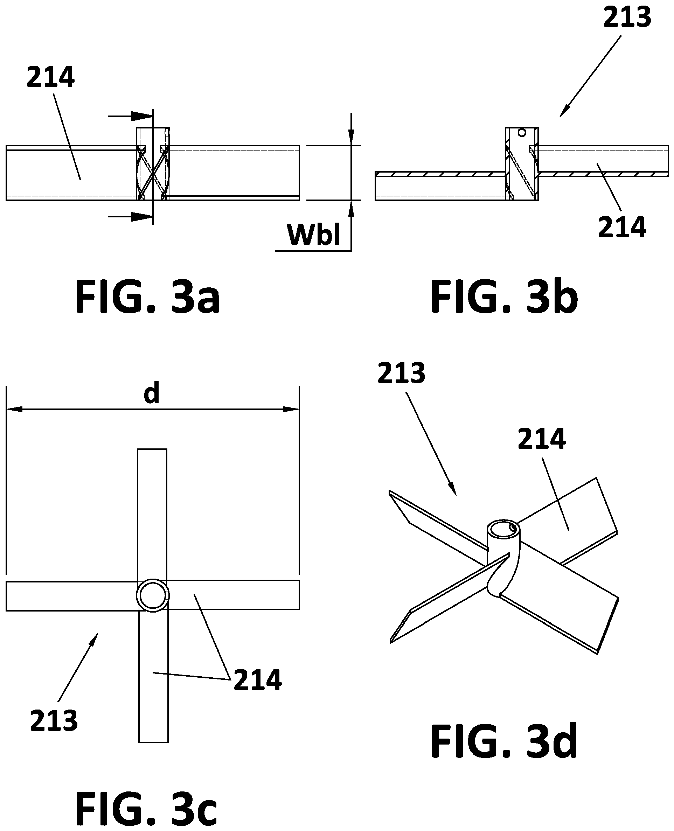

According to these embodiments of the invention, the stirring system comprised in the at least one carbonator reactor comprises inclined blades in order to create a simultaneous radial and axial flow, preferably these blades have a degree of inclination from 5° to 60° with respect to the vertical axis, more preferably the stirring system may comprise from 2 to 8 blades having a width (w_{bl}) from 15% to 30% of the diameter (d) of the stirrer (i.e., the exterior diameter formed by the blades set, see figures 3a-3d), and a power number (Np) of between 0.4 and 4.3. More preferably, the stirring system comprises at least 3 blades, having each of them a degree of inclination from 20° to 45° with respect to the vertical axis.

The baffles, which are attached to the internal wall of the reactor body, can reduce the size of swirls, thus improving the stirring efficiency. Preferably, the carbonator reactor may comprise at least one baffle with a width (w_{d}) of at least 1%, preferably from 1% to 15%, of the internal diameter (D) of the cylindrical shell of the carbonator reactor body. In the at least one carbonator reactor used to carry out the method according to the invention, the ratio between the diameter of the stirrer and the internal diameter of the reactor cylindrical shell (d / D) is preferably from 20% to 45%, more preferably from 25% to 35%.

In particular embodiments of the invention, the impeller (also called turbine impeller in this document) may be located centrally in the stirred reactor to avoid the formation of circulatory flow and vorticity.

The stirring blades are preferably located at a height not exceeding a minimum distance between 0.3 m and 40% of the total height of the liquid from the free surface of the liquid, in order to improve the increase of the specific contact area and its renewal. On the other hand, the maximum distance between the lower impeller and the bottom of the reactor body may be preferably at most 0.6 m. If these distances cannot be guaranteed, a multiple-impeller system may be adopted in a uniform geometric arrangement.

In the method for the preparation of sodium carbonate according to the invention, the gas stream comprising CO₂ is introduced in the at least one carbonator reactor above the surface of the NaOH aqueous solution and, therefore, a direct reaction of the CO₂ comprised in the gas stream with the NaOH present in the surface of the aqueous solution is carried out without any contactor device. More specifically, the CO₂ gas stream is injected forming a "plenum" (also called "gas bulk" in this document) above the liquid phase, so that CO₂ may react along the entire contact surface. In order to promote the transfer of mass from the gas into the liquid, the turbulent agitation regime as described in this document is used in the method of the invention, because such regime can provide the necessary hydrodynamic conditions to achieve higher effective (specific) interfacial area and a continuous renewal of the contact surface, thus maintaining the presence of unreacted OH⁻ absorbent on the surface of the aqueous liquid solution and increasing CO₂ absorption.

In preferred embodiments of the invention, the method is carried out in at least one carbonator reactor comprising a stirring system comprising at least one impeller comprising inclined blades, preferably said blades make an angle from 5° to 60° with respect to the vertical axis; and at least one baffle, preferably the width (w_{d}) of said baffle ranges from 1% to 15 % of the internal diameter (D) of a cylindrical shell comprised in the body of the carbonator reactor, in order to achieve such turbulent agitation regime and, therefore, an improved mass transfer from the gas into the liquid in order to facilitate the chemical reaction between CO₂ and NaOH. However, any other stirring systems may be used as long as they achieve analogous results of surface renewal or increase of the interfacial area in turbulent agitation regime.

In the method for the preparation of sodium carbonate according to the present invention, the gas bulk is at least 3 % of the total internal volume of the reactor body, preferably between 15% to 40% of the said volume.

In the frame of this invention, it shall be understood that "gas bulk" (also referred to as "plenum" in this document) means the internal volume of the reactor body addressed to house the gas stream comprising CO₂ during the carbonation reaction.

In the method for the preparation of sodium carbonate described herein, the flow of gas stream comprising CO₂ is preferably equal to or higher than the absorption capacity of the system in order to avoid a negative pressure in the carbonator reactor, which could result in suction of the reaction mixture. Thus, the supply of the gas stream comprising CO₂ is preferably carried out at the maximum absorption capacity of the system.

In some particular embodiments of the method according to the invention, the supply of the gas stream comprising CO₂ may preferably be carried out at a temperature equal to or lower than 160°C and a pressure equal to or lower than 20 barg.

If required, the gas stream comprising CO₂ can be transported from the emission sources to the carbonator reactor by means of pipes or ducts. The minimum pressure of the gas stream comprising CO₂ may be at least equal to the pressure loss of these pipes, in case of working under atmospheric pressures, whereas a maximum flow rate equal to the absorption of the carbonator system may be used. In those particular embodiments of the invention wherein the gas stream comprising CO₂ is generated in AFP processes, these pressures and flow rates can be achieved even without mechanical means, with the pressure of the gas emitted itself.

On the other hand, in those embodiments of the invention wherein the carbonation reaction is carried out at a pressure different to the atmospheric, mechanical means can be used to increase the pressure of the gas stream comprising CO₂. For pressures up to a maximum of 2 barg, a CO₂ centrifugal or positive displacement blower is preferable used. For higher pressures, i.e. up to 20 barg, a low-pressure compressor connected to a pressure tank is preferably used, as it allows the regulation of pressure and flow with its appropriate control elements.

Preferably, the step of supplying the gas stream comprising CO₂ to the at least one carbonator reactor can be done at atmospheric pressure and a temperature equal to or lower than 80°C, preferably from 60°C to 80°C, since the CO₂ absorption / capture capacity of the reaction mixture can be reduced by more than 40% above this temperature under atmospheric pressure.

If the temperature of the reaction mixture is higher than 80°C in step b) of the method according to the invention, it is preferable to work with a pressure equal to or higher than the vapor pressure of the system. In these conditions of temperature and pressure, the desired CO₂ capture levels can be maintained at a minimum pressure equal to the worst-case vapor pressure defined for the operating conditions of the reactor in which the minimum NaOH concentration and the maximum operating temperature are available. For example, for a maximum operating temperature of up to 90°C, a minimum pressure of 0.68 barg is recommended; for temperatures up to 100°C, 0.95 barg is recommended.

The higher the temperature, the more favorable is the use of the heat generated by the chemical reaction between CO₂ and NaOH, since there is a broader range of possibilities to use it at medium-high temperatures (i.e., temperature higher than 60 °C) than at low temperatures (i.e., temperature lower than 60 °C). Similarly, in those embodiments of the invention wherein high temperatures are used, but the heat generated in the method according to the invention is not intended to be directly used in other cycles of the method itself, heat dissipation is more efficient at higher temperatures. As an example of heat dissipation systems that might be comprised in the carbonator reactor described herein as means for regulating the temperature, dry air heaters or cooling towers can be used at higher temperatures, in particular those close to 160°C, thus avoiding the use of wet cooling towers, with a significant water footprint, with the possibility of carrying out the method of the invention even in dry areas.

Although it is possible to work at higher temperatures, it is preferable not to exceed 160°C to avoid generating vapor and degradation of Na₂CO₃, since the chemical reaction will shift to the left.

The reaction temperature may be regulated by industrial control automatons, preferably Programmable Logic Controller (PLC) connected to the temperature sensors installed in the reactor. The heat dissipation system may be activated or deactivated, depending on the maximum set point temperature, by means of a solenoid valve. Heat dissipation is preferably carried out by means of a jacket and/or coil comprising a conventional heat transfer fluid such as glycol, water or similar. This jacket and/or coil may be connected to a Proportional-Integral-Derivative controller (PID) in which the heat dissipation capacity can be measured and controlled by means of flow meters with temperature sensors connected to cooling system, achieving heat dissipation according to the CO₂ absorption.

The gas pressure can be measured with a pressure sensor and the liquid volume with a level sensor installed at the top of the reactor. The use of non-contact measuring sensors is preferable, since they work with agitated phase. Besides, the use of low frequency devices is recommended due to the interference that can be generated by the vapors. The pressure may be regulated by means of calibrated pressure relief valves, and/or by controlling the blower or compressor tank discharge pressure. The flow of CO₂ can be measured by means of flow sensors, connected to the PLC by means of which the setpoint is regulated. In case of using a CO₂ blower, this flow may be regulated by varying the blower motor frequency with a PID integrated in the mentioned PLC, which connects to the frequency variator.

In some particular embodiments of the invention, the absorption capacity per unit of geometric area, at a temperature equal to or lower than 80°C and a pressure equal to or lower than 0.35 barg, is in the range of between 10 and 46 m³/h m².

The volumetric mass transfer coefficient (*k_{L}a*) may range from 0.04 s-1 to 0.3 s-1, at a temperature equal to or lower than 80°C and a pressure equal to or lower than 0.35 barg.

In the method for the preparation of sodium carbonate described herein, the supply of gas stream comprising CO₂ to the at least one carbonator reactor may be stopped once the desired degree of CO₂ capture or conversion has been achieved. In particular, the CO₂ gas stream supply may be stopped once the pH of the reaction mixture achieves a value from 8 to 13.

In some embodiments of the invention wherein the NaOH aqueous solution of step a) has a NaOH concentration between 35 wt.% and 55 wt.%, the process can be stopped with a pH in the range from 12.0 to 12.8, thus producing/rendering sodium carbonate with a purity above 99%. In these embodiments, the pH of the reaction mixture can be monitored with a pH-meter with a high alkalinity electrode on samples taken from the reactor.

In some particular embodiments of the invention, the method for the preparation of sodium carbonate described herein may be carried out in at least two independent carbonator reactors. In those particular embodiments, the method further comprises the following steps:
e) cleaning the discharged carbonator reactor of step d) and adding further aqueous NaOH solution to the cleaned carbonator reactor, providing a further carbonator reactor containing NaOH aqueous solution as defined in step a);
f) supplying said gas stream comprising CO₂ to one of the at least two carbonator reactors provided in step a) different to that of step b), wherein
   - the gas stream is introduced in said carbonator reactor above the surface of the NaOH aqueous solution, and
   - the reaction mixture is continuously stirred following a turbulent regime;
g) stopping the supply of gas stream comprising CO₂ used in step f);
h) discharging the resulting reaction mixture of step g); and
i) cleaning the discharged carbonator reactor of step h) and adding further aqueous NaOH solution to the cleaned reactor, providing a further carbonator reactor containing NaOH aqueous solution as defined in step a).

In the method according to the invention, steps a) to i) can be carried out n times, wherein n is an integer number higher than 1, so that the capture of a gas stream comprising CO₂ generated as a by-product in an industrial process, such as an alcoholic fermentative process (AFP), can be done without interruptions in different separate reactors, avoiding the recirculation of reagents.

Within the frame of this invention, it should be understood that particular or preferred embodiments described in this document in relation with any of steps a) to d) of the method according to the invention, also refer to the corresponding additional step f) to i).

In particular embodiments of the invention, the method for the preparation of sodium carbonate described herein may further comprise separating sodium carbonate monohydrate from the discharged reaction mixture, preferably by filtration or centrifugation.

In the method of the present invention, sodium carbonate monohydrate (Na₂CO₃·H₂O) may be obtained alongside its aqueous solution; which can be subsequently dried to obtain Na₂CO₃. In the method described herein further products can be obtained, if the reaction is not stopped once consumed all the OH⁻ coming from the NaOH aqueous solution. A mixture of carbonates containing traces of sodium bicarbonate (NaHCO₃), as well as a variety of trona (Na₂CO₃·NaHCO₃·2H₂O), may be obtained which may be marketed directly with the same applications as Na₂CO₃.

However, in preferred embodiments of the invention, sodium carbonate monohydrate obtained or obtainable by the method according to the invention may have a purity between 60.00 wt.% and 99.99 wt.%, preferably between 80.00 wt.% and 99.99 wt.%, more preferably between 90.00 wt.% and 99.99 wt.%. The use of X-ray diffraction is recommended for the determination phase purity.

A further object of the present invention is a carbonator reactor (also referred to as "stirred reactor" or "carbonation stirred reactor" in this document) comprising:
- a body comprising:
   - a nozzle,
   - at least an inlet adapted for introducing liquids, solids and mixtures thereof,
   - at least one outlet adapted for discharging a liquid phase,
- means for regulating the temperature, and
- means for regulating the pressure,
characterized in that the carbonator reactor further comprises:
- a stirring system comprising at least one impeller comprising inclined blades, preferably said blades make an angle from 5° to 60° with respect to the vertical axis; and
- at least one baffle, preferably the width (w_{d}) of said baffle ranges from 1% to 15 % of the internal diameter (D) of a cylindrical shell comprised in the body of the carbonator reactor.

In some embodiments of the invention, the body of the carbonator reactor described herein preferably comprises a cylindrical shell, a conical bottom and an ellipsoidal or torispherical head. This constructive geometry of the reactor body helps to improve the mass transfer of the gas (CO₂) in the gas-liquid interface formed in the method for the preparation of sodium carbonate described herein. In these particular embodiments of the invention, the width (w_{d}) of the baffles preferably ranges from 1% to 15 % of the internal diameter (D) of the cylindrical shell.

The stirring system comprised in the at least one carbonator reactor comprises a motor, a stirred shaft and at least one impeller, which comprises inclined blades in order to create a radial and axial flow, preferably these blades have a degree of inclination from 5° to 60° with respect to the vertical axis, more preferably the impeller may comprise from 2 to 8 blades having a width (w_{bl}) from 15% to 30% of the diameter (d) of the stirrer, i.e., the total exterior diameter formed by the blades set, and a power number (Np) of between 0.4 and 4.3. More preferably, the stirring system comprises one impeller comprising at least 3 blades, having each of them a degree of inclination from 20° to 45° with respect to the vertical axis.

The baffles, which are attached to the internal wall of the reactor body, can reduce the size of swirls, thus improving the stirring efficiency. Preferably, the carbonator reactor may comprise at least one baffle with a width (w_{d}) of at least 1%, preferably from 1% to 15%, of the internal diameter cylindrical shell (D) of the carbonator reactor body.

The carbonator reactor described herein may comprise a heat extraction or dissipation system as means for regulating the temperature, which allows to release heat generated from the method according to the invention due to the strong exothermic nature of the reaction and, additionally it can improve the thermal efficiency of other processes or produce other types of useful energy. More specifically, the carbonator reactor described herein may comprise industrial control automatons, preferably Programmable Logic Controller (PLC) connected to temperature sensors installed in the reactor to regulate the temperature of the reaction mixture. The heat extraction or dissipation system may be activated or deactivated, depending on a maximum set point temperature, by means of a solenoid valve located in the carbonator reactor. The heat dissipation system may preferably comprise a jacket and/or coil, which is specifically configured for dissipating heat generated wherein the method for the preparation of sodium carbonate described herein takes place in at least one carbonator reactor according to the invention. The heat transfer fluid preferably comprised in the heat dissipation system of the carbonator reactor is glycol, water or similar.

The same heat dissipation system described above can be connected to a PID, in which the heat dissipation capacity can be measured and controlled by means of flow meters with temperature sensors connected to a cooling system, can be used for controlling the heat dissipation process in order to achieve the required heat dissipation according to the CO₂ absorption.

Additionally, the carbonator reactor described herein may comprise a level sensor installed at the top of the reactor in order to control the liquid volume of the reaction mixture inside the reactor body. The use of non-contact measuring sensors is preferable since they can work with agitated phases. More specifically, low frequency devices are preferably in order to avoid the interference that can be generated by the vapors.

The carbonator reactor of the invention also comprises pressure sensors and means for regulating the pressure such calibrated pressure relief valves, and/or for controlling the blower or compressor tank discharge pressure, which are able to regulate the pressure of the system.

The flow of CO₂ may be measured by means of flow sensors, connected to the PLC by means of which the setpoint may be regulated. In those embodiments of the invention wherein a CO₂ blower is used, this flow will be regulated by varying the blower motor frequency with a PID integrated in the mentioned PLC, which connects to the frequency variator. Finally, the gas injector or nozzle should preferably be located at the highest point of the reactor body to avoid obstruction by splashes from the agitated phase.

The carbonator reactor described in this document comprises at least one gas injector or nozzle designed to introduce the gas stream comprising CO₂ in the carbonator reactor, wherein the NaOH aqueous solution is contained, giving rise to a reaction mixture, in particular a heterogeneous reaction mixture formed by the NaOH aqueous solution (liquid) and the gas stream comprising CO₂ (gas) in the method for the fabrication of sodium carbonate described herein. It is recommended that this nozzle has a minimum diameter of 30 mm, and that the opening should be preferably located at a minimum height of 1.0 m from the liquid surface, to avoid obstruction by splashing.

The carbonator reactor further comprises at least one inlet adapted for introducing liquids, solids or mixtures thereof. In particular, it might comprise at least one inlet specifically configured for introducing liquids or slurries, and at least one inlet specifically configured for introducing solids. Additionally, the carbonator reactor also comprises at least one outlet adapted for discharging a liquid phase or slurry, in particular, this outlet is specifically configured for discharging the reaction mixture containing sodium carbonate from the at least one carbonator reactor in steps d) or h) of the method for the preparation of sodium carbonate described in this document.

A further object of the present invention refers to the use of a carbonator reactor as described herein for the preparation of sodium carbonate by capturing of CO₂ in a NaOH aqueous solution, preferably following the method according to the current invention.

### BRIEF DESCRIPTION OF THE FIGURES

Figure 1a shows the installation used in example 1, wherein a demonstrative experimental development on a laboratory scale was carried out, with a volume of 3 L carbonator reactor destined to the capture of highly concentrated industrial CO₂ gas (99.999%) supplied by means of compressed gas bottles.
Figure 1b corresponds to an enlargement view of figure 1a, wherein the carbonator reactor used in example 1 is shown.
Figure 2 shows the different parts that compose a carbonator reactor according to the invention. This embodiment of carbonator reactor was used in example 2, wherein a demonstrative application of this invention for the capture of CO₂ in described. More specifically, this carbonator reactor was used in an agro-food industry in which CO₂ is produced in the fermentation process stage (AFP), with a purity of between 30.000% and 99.999%.
Figure 3 depicts different views (3a, 3b, 3c and 3d) of a particular stirring system according to the invention, wherein the impeller comprises 4 inclined blades.

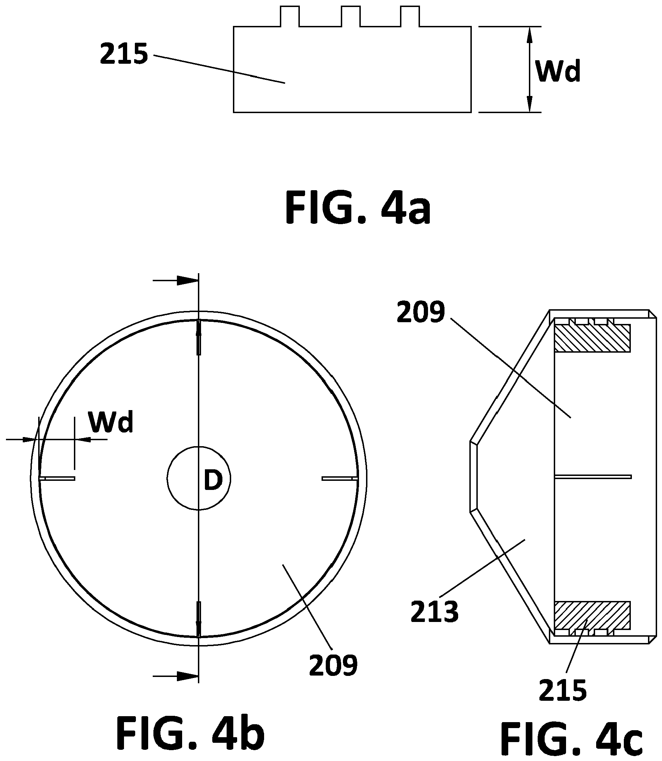

Figure 4 shows a particular embodiment of the baffle according to the invention (4a), and their position in the carbonator reactor body (4b and 4c).

### EXAMPLES

In the following, the invention will be further illustrated by means of Examples. The Examples should in no case be interpreted as limiting the scope of the invention, but only as an illustration of the invention.

### EXAMPLE 1: PREPARATION OF Na₂CO₃ BY CAPTURING CO₂ IN A NaOH AQUEOUS SOLUTION (laboratory scale)

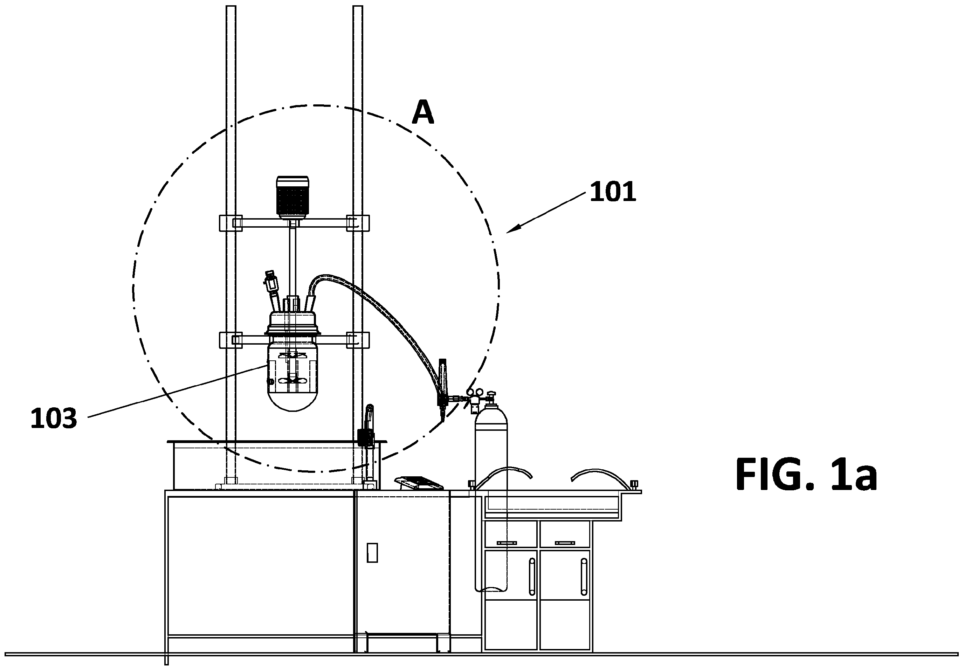

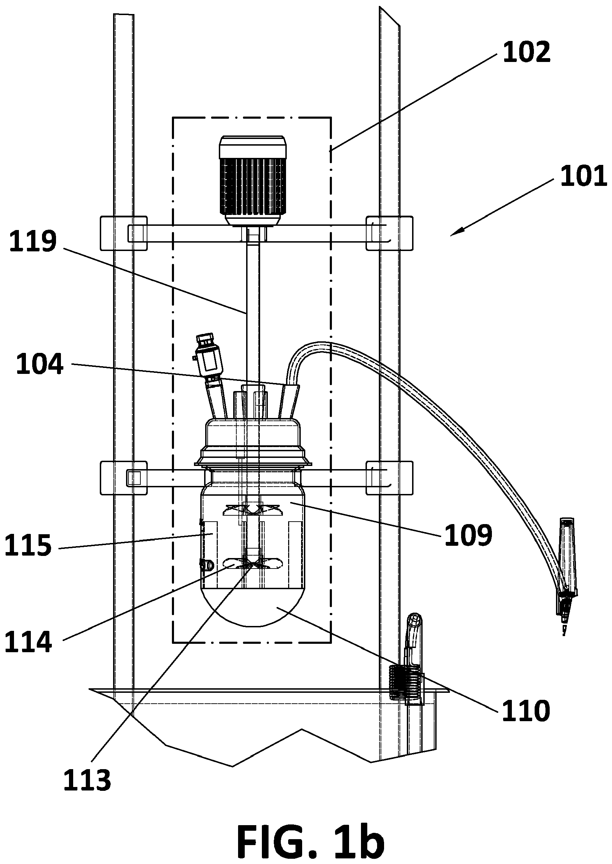

For this purpose, an installation comprising a carbonation stirred reactor (see figures 1a and 1b) was built to work in a semi-continuous regime, specifically by supplying discontinuously the NaOH aqueous solution, and continuously the CO₂ gas stream flow. The 3L Pyrex glass reactor (101) had a thickness of 3 mm and four baffles (115) uniformly distributed along the walls of the reactor body (103) with an edge of between 3 and 5 mm. The height/diameter ratio of the reactor body was close to 70%. In addition, the carbonator reactor comprised a stirring system (102) formed by two impeller turbines (113) having 4 blades (114) inclined 48°. The agitation system (102) had a motor (112) with adjustable speed between 0 and 700 rpm and a stirred shaft (119). Likewise, the reactor had a lid with a nozzle adapted for gas injection (104), and several inlets for probe insertion, agitator placement, etc. (see figure 1b). To guarantee heat dissipation and maintain a constant working temperature, a 50 L thermostatic bath was used with water as the main cooling fluid, thus allowing the desired setpoint temperature in the reactor to be regulated. For this purpose, the reactor had a temperature probe (internal thermocouple) for monitoring the temperature of the agitated phase (resistant to strongly basic media) and another for measuring the temperature of the thermostated bath. The pH was controlled by means of a pH-meter with a specific electrode for strongly basic media, as well as by taking samples for its due chemical evaluations. The gas was directly injected from the gas cylinder by means of a pressure reducer connected to a nozzle (104), which introduced the gas stream comprising CO₂ in the carbonator reactor above the surface of the NaOH aqueous solution, while maintaining the reaction mixture continuously stirred following a turbulent agitation regime. The gas flow rate was measured by means of CO₂ by using flowmeters.

During the development of the experiment, with a NaOH 12.0 M aqueous solution at pressures up to 2.0 barg and temperatures between 5 and 160 °C, the present invention was demonstrated to be viable, achieving a volumetric rate of CO₂ consumption between 0.02 and 30 L/min. The Np converged to a range between 1.8 and 2.6 for Reynold numbers higher than 120,000. The reaction process is stopped when a pH of 12.4 is reached. The identity of the formed products was determined by advanced XRD techniques which revealed the high purity of sodium carbonate (99.99%), with the presence of secondary phases at trace level due to the formation of bicarbonates or trona in some experimental tests.

### EXAMPLE 2: PREPARATION OF Na₂CO₃ BY CAPTURING CO₂ IN A NaOH AQUEOUS SOLUTION (Pre-pilot scale)

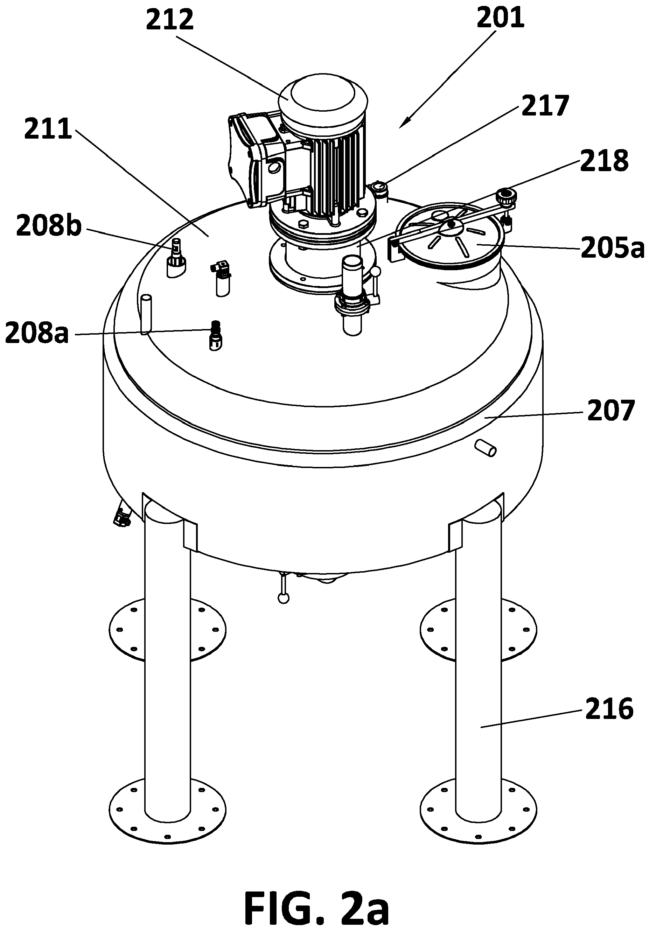

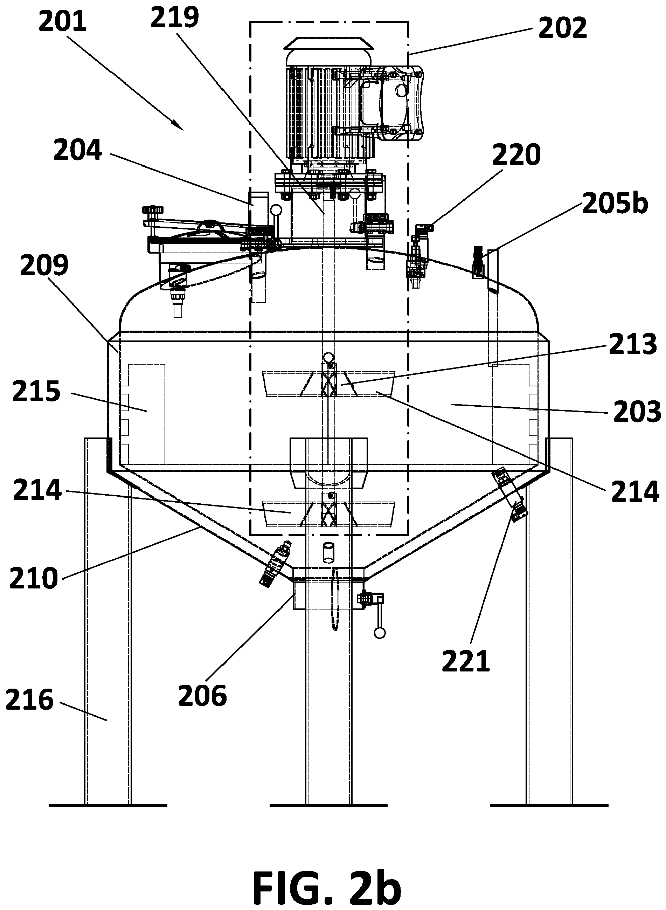

A further demonstrative example was carried out in a carbonator reactor according to the invention on a "Pre-Pilot" scale located in an agri-food industry (see figure 2). Specifically, the carbonator reactor (201) was installed in a wine producing industry, wherein the CO₂ generated in one of the stages of its productive process of alcoholic fermentation was captured. According to this particular embodiment of the invention, a 10 mm thick A316L stainless steel "Pre-Pilot" scale stirred reactor (201) of 790 L was built, wherein the stirred reactor (201) comprises a body (203) with a conical bottom (210), a cylindrical shell (209) and an ellipsoidal head (211) supported by vertical legs (216). The shoulder height of the reactor was 1.7 m. The reactor had a height/diameter ratio of at least 80%. It also had four 100 mm edge baffles (215) that were 1 m long and 4 mm thick. As in example 1, the reaction worked in a semi-continuous regime, for convenience, and at pressures of between 0 and 2.0 barg. To work in this range, the increase of the CO₂ pressure was made by means of a positive displacement blower (not shown in figure 2) as means for regulating the pressure. Additionally, the reactor (201) included the installation of overpressure relief valve (208a) and vacuum relief valve (208b) calibrated to avoid damages. Likewise, this carbonator reactor (201) was provided with a conventional type jacket having spiral deflectors as means for regulating the temperature (207) and, in particular, to cool down the reactor body with a minimum standard channel space of 30 mm, thus controlling the working temperatures up to 160°C. The cooling area covered about 80% of the entire reactor area. The cooling water came directly from the cooling system of the warehouse itself.

First of all, an aqueous solution of NaOH 35% wt. was supplied to the carbonator reactor (201) coming from intermediate bulk containers, then a supply of a gas stream comprising between 30.0% wt. and 99.9 wt.% of CO₂ was injected into the stirred reactor (201) by a nozzle (204) above the surface of the NaOH aqueous solution, being the CO₂ absorbed at the interface of the stirred liquid phase as described above. The reaction mixture was continuously stirred following a turbulent agitation regime. In particular, the agitation was carried out by means of the stirring system (202) that incorporates a stirrer gearbox (218), 2 impeller turbines (213) with 4 blades (214) each one, wherein the blades (214) (see also figure 3) are inclined 48° with respect to the vertical axis and variable in height. The stirring system (202) was driven by a 6 hp motor (212). The assembly of this system was rigid-type, with a guiding turret that assembles the solid shaft (219) of 35 mm and 800 mm long with a reduction stirrer gearbox (218) of 170 N·m of nominal torque. With regard to instrumentation and control, two temperature sensors (221) were used, located crosswise, to control hot zones during the reaction. In the same way, the temperature, flow, humidity and purity of the CO₂ fed in from the fermenters were measured by means of flowmeters and capacitive purity sensors. On the other hand, the volume of the liquid phase was controlled by a low frequency level sensor (217). The CO₂ pressure in the reactor was controlled by a gas pressure sensor (220). Finally, the pH was controlled by means of sampling using a pH-meter with a high alkalinity electrode.

The flow, pressure, and temperature of the cooling water was also controlled. The control of the process was carried out by means of different industrial control automatons. The plenum, i.e., the internal volume of the reactor body addressed to house the gas stream comprising CO₂ during the carbonation reaction comprises 25% of the total volume of the reaction mixture. In this process, absorption capacities up to 950 L / min were obtained. After obtaining a 100% conversion, when the pH of 12.4 is reached, the obtained product was then discharged by the outlet adapted for discharging slurry (206). This product was then filtrated using a centrifuge and left to dry. The resulting powder was characterized as a sodium carbonate with a phase purity of between 80% and 99% through X-Ray Diffraction techniques.

## Claims

1. A method for the preparation of sodium carbonate, **characterized by** comprising the following steps:
a) providing at least one carbonator reactor (101, 201) containing a NaOH aqueous solution;
b) supplying a gas stream comprising CO₂ to the at least one carbonator reactor (1) provided in step a), wherein
- the gas stream is introduced in said carbonator reactor (101, 201) above the surface of the NaOH aqueous solution,
- preferably the flow of the gas stream comprising CO₂ is equal to or higher than the absorption capacity of the system, and
- the reaction mixture is continuously stirred following a turbulent agitation regime,
c) stopping the supply of the gas stream comprising CO₂ to the carbonator reaction (101, 201), and
d) discharging the reaction mixture containing sodium carbonate from the at least one carbonator reactor (101, 201).

2. The method according to claim 1, wherein the NaOH aqueous solution contained in the carbonator reactor (101, 201) provided in step a) has a concentration equal to or higher than 10 wt.%, preferably from 28 wt.% to 77 wt.%, more preferably from 35 wt.% to 55 wt. %.

3. The method according to any one of claims 1 or 2, wherein the amount of CO₂ comprised in the gas stream is equal to or higher than 30 wt.%, preferably from 80 wt.% to 100 wt.%, more preferably from 90 wt.% to 99.9 wt.%, and even more preferably from 95 wt.% to 99.9 wt.%

4. The method according to any one of claims 1 to 3, wherein the CO₂ stream is generated in an alcoholic fermentative process (AFP).

5. The method according to any one of claims 1 to 4, wherein the turbulent agitation regime has a Reynolds number from 5,000 to 300,000.

6. The method according to any one of claims 1 to 5, wherein the turbulent agitation regime has a speed from 50 to 400 rpm, and preferably the reaction mixture has a liquid free surface renewal speed of at least 0.06 m/s.

7. The method according to any one of claims 1 to 6, wherein the carbonator reactor (101, 201) comprises:
- a stirring system (102, 202) comprising at least one impeller (113, 213) comprising inclined blades (114, 214), preferably said blades make an angle from 5° to 60° with respect to the vertical axis; and
- at least one baffle (115, 215), preferably the width (w_{d}) of said baffle ranges from 1% to 15 % of the internal diameter (D) of a cylindrical shell (109, 209) comprised in the carbonator reactor (101, 201).

8. The method according to any one of claims 1 to 7, wherein the gas bulk comprises at least a 3% of the maximum internal volume of the body (103, 203) of the at least one carbonator reactor (101, 201).

9. The method according to any one of claims 1 to 8 wherein the supply of the gas stream comprising CO₂ to the at least one carbonator reactor (101, 201) is carried out at a temperature equal to or lower than 160°C and a pressure equal to or lower than 20 barg.

10. The method according to claim 9, wherein the supply of the gas stream comprising CO₂ to the at least one stirred reactor (101, 201) is carried out at atmospheric pressure and a temperature equal to or lower than 80°C, preferable from 60°C to 80°C.

11. The method according to any one of claims 1 to 10, wherein the absorption capacity per unit of geometric area is from 10 to 46 m³/h m², at a temperature equal to or lower than 80°C and a pressure equal to or lower than 0.35 barg.

12. The method according to any one of claims 1 to 11, wherein the method comprises stopping the supply of the gas stream comprising CO₂ to the carbonator reactor (101, 201), when the pH of the reaction mixture achieves a value from 8 to 13.

13. The method according to any one of claims 1 to 12, wherein the method further comprises separating sodium carbonate monohydrate from the discharged reaction mixture, preferably by filtration or centrifugation.

14. A carbonator reactor (1) comprising
- a body (103, 203) comprising:
- a nozzle (104, 204),
- at least an inlet (205a, 205b) adapted for introducing liquids, solids or mixtures thereof,
- at least one outlet (206) adapted for discharging a liquid phase or slurry,
- means for regulating the temperature (207), and
- means for regulating the pressure (208a, 208b),
**characterized in that** the carbonator reactor (101, 201) further comprises:
- a stirring system (102, 202) comprising at least one impeller (113, 213) comprising inclined blades (114, 214), preferably said blades make an angle from 5° to 60° in respect to the vertical axis; and
- at least one baffle (115, 215), preferably the width (w_{d}) of said baffle ranges from 1% to 15 % of the internal diameter (D) of a cylindrical shell (109, 209) comprised in the body (103, 203) of the carbonator reactor (101, 201).

15. Use of a carbonator reactor (101, 201) as defined in claim 14 for the preparation of sodium carbonate by capture of CO₂ in a NaOH aqueous solution.
